# EUROPEAN PATENT APPLICATION

(11) **EP 1 434 210 A2**
(43) Date of publication of application: **30.06.2004**
(21) Application number: 03258010.2
(22) Date of filing: 18.12.2003
(51) Int. Cl.: G11B 7/24, G11B 23/40, G11B 7/26, G11B 7/007

(54) **Optical recording medium with visible pattern formed in rom area**

(30) Priority: 18.12.2002 JP 2002366195; 04.06.2003 JP 2003159288
(71) Applicant: Ricoh Company, Tokyo 143-8555 (JP)
(72) Inventor: Shimofuku, Akira, Atsuga-shi Kanagawa (JP)
(74) Representative: Mounteney, Simon James

(57) **Abstract**

A disk-type optical recording medium that has a visible pattern in its read-only area. The visible pattern is produced making use of change in reflectance of the disk, which is caused by change in product W*L of a width (W) and a length (L) of an nT pit formed in the read-only area, where n denotes a natural number, and T denotes clock time.
The fabrication process for the stamper and for the medium are also described.

## Description

### BACKGROUND OF THE INVENTION

### 1. Field of the Invention

The present invention generally relates to an optical recording medium, and more particularly, to an optical recording medium having a visible pattern formed in a ROM area to allow the user to identify the data contained in this medium.

### 2. Description of Related Art

Along with continuing increase of information amount and the rapid spread of personal computers, disk drives capable of high-density and high-speed recording and reproduction of a large amount of data have become commercially available, and are spreading among users. To carry, provide, or distribute information, read-only disks, such as CD-ROMs and DVD-ROMs, are generally used. The information carried in these optical recording media is reproduced by a disk drive using a laser beam. An optical recording medium can carry multiple types of information, including a large volume of computer software, images, and text, which are read quickly at a time and transferred to a hard disk or other drives at a high transfer rate.

In recent years and continuing, hybrid disks are spreading. Hybrid disks have recordable areas in the read-only areas, so that new information can be recorded in the recordable areas. In this regard, a hybrid disk functions as both a read-only disk and a recordable disk. With a hybrid disk, necessary information can be added to the disk, making use of the computer software already recorded in this disk, to improve the usability of the optical recording medium. For example, the old contents of the computer software stored in the disk can be upgraded to a new version. This is advantageous because the user does not have to obtain or use an additional CD-ROM.

However, since a variety of information can be recorded in a read-only disk or a hybrid disk, an optical recording medium intended for distribution purposes often contains multiple types of information. In such a case, it is desirable for the user to be able to identify what kind of information is contained in the optical recording medium (such as a distribution disk) prior to reproducing the information through the disk drive. However, in reality, the user cannot identify the contents of the optical recording medium until they are reproduced in most cases. It is actually difficult to discern the number of contents, the volume of each content, or information about the optical recording medium itself before the reproduction.

Meanwhile, the contents recorded in a read-only disk or a hybrid disk can be copied easily into an optical recording disk consisting of RAM areas. When information is illegally copied (without authorization), the originality of the contents essentially recorded in the former recording medium is harmed. In addition, if private information or secret information is contained in the optical recording medium, other problems directed to security in information management arise.

For the conventional optical recording medium having ROM areas in which contents are stored in advance, it is a prerequisite that the product W*L of the width (W) and the length (L) of an nT pit, which denotes the standard area of the nT pit defining the information recorded in the optical recording medium, be substantially constant among those pits with the same value of "n" in the same optical recording medium.

JPA 9-231616 discloses that the ratio of the length of a pit to that of the land portion is varied in each unit area that forms a visible image, thereby producing visible gradation of a visible image. This technique aims to draw a visible image, including pictures or characters, on an optical disk. Since these pits formed at a variable ratio on the optical disk form a random pattern, the signals reproduced from those pits do not have any significance. Consequently, this technique cannot be applied to information recording areas of the optical disk.

JPA 2002-123983 discloses a technique for representing a visual watermark by forming a shallow recess around a signal pit or in a part of the land portion extending between signal pits. This technique aims to create a visible lettering pattern, while preventing reading errors. With this technique, a stepped pit consisting of a signal pit and a shallow recess extending from the signal pit is formed. However, it is difficult for an exposure apparatus to accurately produce a stepped pit due to its optical characteristics. In addition, the signal reproduced from such a stepped pit may loose its original information due to adverse affect of the recess being located adjacent to the signal pit. Accordingly, this technique is unsuitable for information recording areas on the optical recording medium.

### SUMMARY OF THE INVENTION

It is an object of the present invention to overcome the above-described problems, and to provide an optical recording medium bearing visually perceptible information in addition to contents recorded in a ROM area of the optical recording medium.

It is also an object of the present invention to provide an optical recording medium that allows a user to identify the information contained in the optical recording medium and to discern the number of information items and the volume of each information item prior to reproduction.

It is also an object of the present invention to provide an optical recording medium that can prevent illegal copying.

It is also an object of the present invention to provide an optical recording medium that can be used for testing (or checking) an optical recording device, making use of the characteristics of the optical recording medium itself.

Having studied thoroughly, the inventor of the present invention found that when the product W*L of the width (W) and the length (L) of an nT pit, which is formed in an optical recording medium to record information, varies, the reflectance of the information-recorded portion of the disk changes. The inventor makes use of this fact to achieve the above-described objects.

In one aspect of the invention, an optical recording medium having a visible pattern in a read-only area of a disk is provided. The visible pattern is produced making use of change in reflectance of the disk caused by change in product W*L of a width (W) and a length (L) of an nT pit formed in the read-only area, where n denotes a natural number and T denotes clock time.

The visible pattern is, for example, a concentric pattern, a radial pattern, or a character or symbol pattern.

Preferably, the optical recording medium has a recordable area, in addition to the read-only area.

In another aspect of the invention, an optical recording medium comprises a substrate having a read-only area in which pits are formed such that a product W*L of a width (W) and a length (L) of an nT pit varies according to a prescribed manner, where n denotes a natural number and T denotes clock time.

The substrate is of a disk type, and the product W*L of the nT pit varies along the radius of the disk. In this case, a visible concentric or annular pattern is produced in the read-only area due to reflectance change along the radius. Alternatively, the product W*L of the nT pit varies in the circumferential direction of the disk. In this case, a visible radial pattern is produced in the read-only area due to reflectance change along the track of the disk.

The product W*L of the nT pit formed in the optical recording medium varies either continuously or discontinuously.

In still another aspect of the invention, a method of fabricating an optical recording medium is provided. The method comprises the steps of preparing a stamper having a prescribed pit pattern, and forming a disk using the stamper such that a product W*L of a width (W) and a length (L) of an nT pit varies in a prescribed area of the disk.

In the stamper preparing step, the pit pattern with a variable length of the nT pit is formed in the stamper. In this case, a laser exposure step is carried out to delineate the pit pattern with a variable length, while changing an exposure duty of the nT pit.

In the stamper preparing step, the pit pattern with a variable width of the nT pit may be formed in the stamper. In this case, a laser exposure step is carried out to delineate the pit pattern with a variable width, while changing an exposure power.

When preparing the stamper, the product W*L of the pit pattern varies either continuously or discontinuously.

In yet another aspect of the invention, a stamper used to fabricate an optical recording medium is provided. The stapmer has a prescribed pit pattern in at least a portion thereof, the pit pattern being formed such that a product W*L of a width and a length of an nT pit forming the pit pattern varies, where n is a natural number and T denotes clock time.

Preferably, the stamper is used to fabricated a disk-type optical recording medium, and the product W*L of the nT pit varies either in a radial direction or a circumferential direction.

The product W*L of the nT pit varies either continuously or discontinuously.

### BRIEF DESCRIPTION OF THE DRAWINGS

Other objects, features, and advantages of the present invention will become more apparent from the following detailed description when read in conjunction with the accompanying drawings, in which:
FIG. 1 illustrates an optical recording medium with a ROM area and a recordable area according to an embodiment of the invention;
FIG. 2 is a cross-sectional view showing the layered structure of the optical recording medium according to an embodiment of the invention;
FIG. 3 is a graph showing the change in reflectance as a function of product W*L of the width (W) and the length (L) of the pit formed in the ROM area of the optical recording medium;
FIG. 4 is a graph showing the relation between the pit width (W) in the ROM area of the optical recording medium and the exposure power in the laser exposure process during fabrication of a stamper;
FIG. 5 is a graph showing the length (L) of the pit formed in the ROM area of the optical recording medium changing linearly as a function of pit duty;
FIG. 6 is an example of the optical recording medium having a visible concentric pattern in the ROM area according to an embodiment of the invention;
FIG. 7 illustrates a recording disk drive used in the embodiment of the present invention;
FIG. 8 is an example of the optical recording medium having a visible radial pattern in the ROM area according to an embodiment of the invention; and
FIG. 9 is an example of the optical recording medium having visible letters formed in the ROM area according to an embodiment of the invention.

### DETAILED DESCRIPTION OF THE INVENTION

The preferred embodiments of the present invention are next described with reference to the attached drawings.

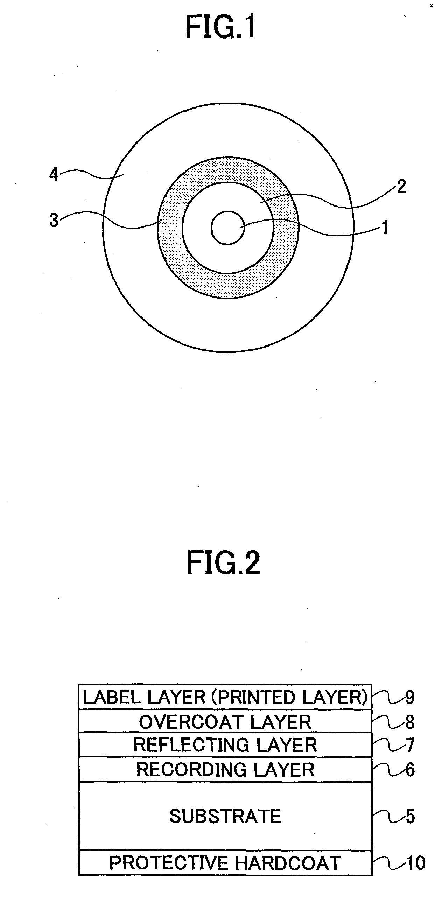

FIG. 1 illustrates an optical recording medium according to an embodiment of the invention. The optical recording medium illustrated in FIG. 1 is a hybrid disk with a ROM area 3 in which information is recorded in advance and a recordable area 4 coexisting in the same medium. The ROM area 3 may be provided in an arbitrary region on the optical recording medium. In the example shown in FIG. 1, the ROM area 3 extends outward from the inner-most position of the data carrier part outside the clamp area 2. By providing the ROM area in the inner part of the disk, stable signal quality is obtained.

FIG. 2 illustrates in a cross-sectional view the layered structure of the optical recording medium according to an embodiment of the invention. As the basic structure, the optical recording medium has a substrate 5, in which a pit pattern forming the ROM area and guide grooves defining a recordable area are formed. A recording layer 6, a reflecting layer 7, and an overcoat layer 8 are formed on the substrate 5. The overcoat layer 8 is covered with a label layer (or a printed layer). The opposite face of the substrate 5 is a mirror surface, which is covered with a protective hardcoat 10.

Polycarbonate resin is preferably used as the material of the substrate 5 because it is superior in molding nature, optical characteristics, and cost performance. In the ROM area of the optical recording medium, it is desirable to set the width of the pit formed in the substrate 5 to 0.40-0.75 µm, and set the depth of the pit to 2500-3300 Angstroms. The width and the depth of the guide groove formed in the recording area of the substrate 5 are preferably set to 0.25-0.75 µm and 150-1250 Angstroms, respectively. The thickness of the substrate 5 is 1.2 mm in the preferred embodiment. Dummy pits having a depth similar to that of the guide groove of the recording area may be formed between pits of the ROM area. Such dummy pits may be formed either separately or continuously from the pits.

For the recording layer, a pigment liquid material in which phthalocyanine dye or cyanine dye is dissolved in a mixture solvent of fluoroalcohol, such as 2,2,3,3-tetrafluoropropanol, and 2-methoxyethanol or ethylene glycol dimethyl ether is suitably used because of satisfactory recording sensitivity and recording speed. To form the recording layer, it is preferable to apply the pigment liquid onto the substrate 5 by spin coating because this technique is superior in mass production and film-formation. The thickness of the recording layer is determined based on the required signal characteristics. For example, it is preferable to set the thickness to 100-500 nm.

For the reflecting layer, a metal material such as Au or Ag can be used. The reflecting layer can be formed using various known types of vapor deposition, and sputtering is preferably used because it is superior in mass production and film quality. The thickness of the reflecting layer is similar to that of the recording layer, and it is set to or near 100 nm.

The reflecting layer is preferably covered with an overcoat layer for preventing oxidation. In general, ultraviolet setting resin formed by spin coating is used as the overcoat layer. The thickness of the overcoat layer is set to 3-15 µm from the viewpoint of mechanical characteristics and error prevention characteristics. Similarly, the protective hardcoat is generally formed of an ultraviolet setting resin by spin coating so as to have a thickness of 2-6 µm from the viewpoint of the mechanical characteristics and wear/damage resisting characteristics. It is also preferable to mix a conductive material into the coating material, as necessary, to prevent static electrification. This arrangement can prevent dust from sticking onto the surface.

In the optical recording medium with a ROM area in which information is recorded in advance, a number of pits with signal width of nT (where n is a prescribed number and T denotes the clock time representing the time corresponding to the period of clock used for signal modulation). In this portion, a binary pulse signal having values of "0" and "1" is modulated, and a number of pits with random lengths are formed at various pit intervals based on a clock of a prescribed frequency.

In the conventional optical recording medium having a ROM area in which information is recorded in advance, the product W*L of the width (W) and the length (L) of a pit, which is the standard area size of an nT pit defining the information stored in the medium, is substantially constant among those pits having the same value of "n" in the same optical recording medium.

In contrast, the product W*L of the width (W) and the length (L) of the pit varies in the ROM area of the optical recording medium according to the present invention. A substrate with a pit pattern having a variable W*L value in the ROM area can be manufactured easily by simply adjusting the fabrication condition of the stamper, which is a master disk used to mold the substrate of an optical recording medium. In general, a stamper is fabricated through steps of application of a photoresist material onto a glass disk, laser exposure, development, and electroforming. By changing the laser exposure condition according to the information obtained through the pre-mastering process, a stamper having a bit pattern in which the product W*L of the width (W) and the length (L) of an nT pit varies among those nT pits with the same "n" value in the ROM area of an optical recording medium can be fabricated.

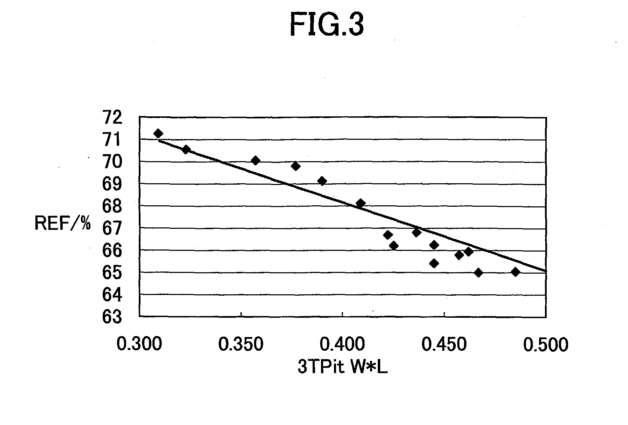

It is found that when the product W*L of the width (W) and the length (L) of an nT pit changes, the reflectance of the recording portion in the ROM area of the optical recording medium varies linearly, as illustrated in FIG. 3. Making use of this fact, a contrast of light and shade can be formed in the ROM area of the substrate that forms the optical recording medium. This contrast can be made clearer to an extent of a visible level by forming a recording layer using a pigment liquid material and a reflecting layer over the substrate.

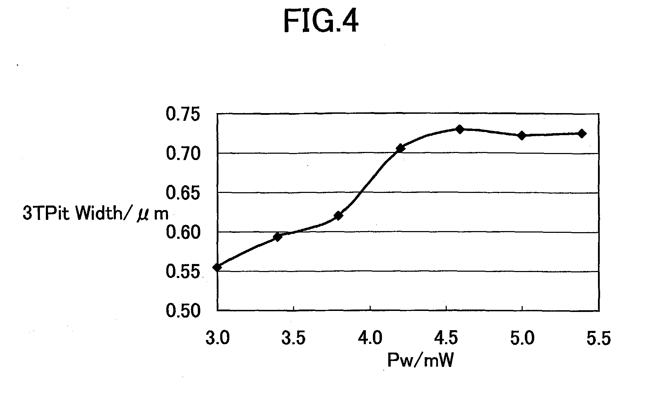

In order to change the product W*L of the width (W) and the length (L) of the pit in the ROM area of the optical recording medium, it is advantageous to vary the length (L) of the pit. There are two methods for changing the product W*L: one is varying the width (W) of the pit, and the other is varying the length (L) of the pit. The former method can be realized by changing the exposure power of the laser beam emitted for forming a pit pattern of the stamper during the laser exposure process. By changing the exposure power of the laser beam, the width of an nT pit formed in the master disk can be varied continuously (in an analog manner), as illustrated in FIG. 4. Under the irradiation of the laser beam, the photoresist pattern defining the width of the pit changes through melting of the photoresit material.

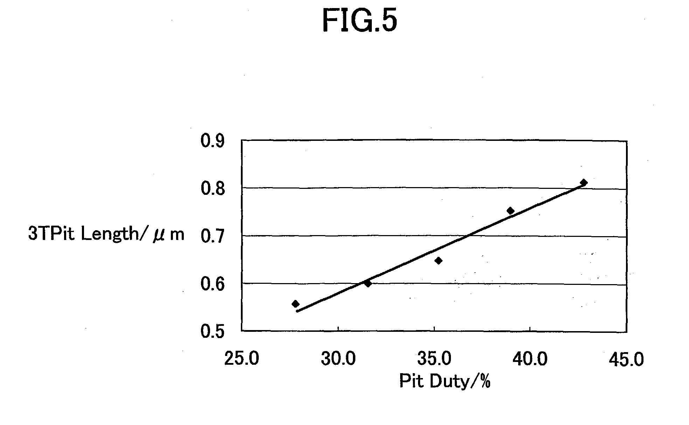

On the other hand, in the latter method, the length (L) of the pit can be changed by varying the duty of the pit during the exposure process. This method is suitable for varying the length of the pit discontinuously (in a digital manner). In this context, "duty" is a ratio of the pit exposure time to the time constant. FIG. 5 is a graph showing an example of 3T pit length changing as a function of duty.

Using the comparison between FIG. 4 and FIG. 5, it is understood from FIG. 4 that the pit width does not increase any longer once the pit exposure power exceeds a certain threshold level. In addition, a pit exposure process using a high-power laser source imposes a burden on the optical system environment of the exposure apparatus, requiring precise adjustment of the focusing position and the optical path extending from the laser source (or the light source) to the master disk. For this reason, it is preferred to vary the length (L) of the pit linearly by adjusting the duty to change the product W*L of the width (W) and the length (L) of the pit because of its simpler adjustment and lesser burden on the optical system environment.

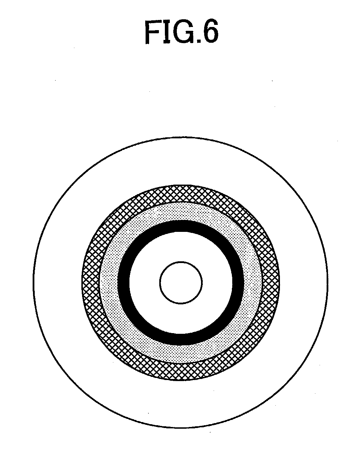

In this manner, the ROM area of the optical recording medium can bear visible information making use of change in reflectance of the recording portion of the ROM area, which is produced by varying the product W*L of the width (W) and the length (L) of the pit pattern. It is preferable that such visible information be represented by a concentric pattern. As illustrated in FIG. 6, the ROM area of the optical recording medium consists of annular regions with different values of reflectance, which produces annular gradation extending in the radial direction. This visible pattern of annular gradation is produced by varying the product W*L of the width (W) and the length (L) of the pit every track, every unit time, or every prescribed length in the radial direction. With the concentric pattern (or the annular gradation), the user can visually identify the type or the number of information items recorded in the ROM area of the optical recording medium. In addition, if the contents of information recorded in the optical recording medium are known in advance, the data volume of each of the contents of information can be estimated approximately.

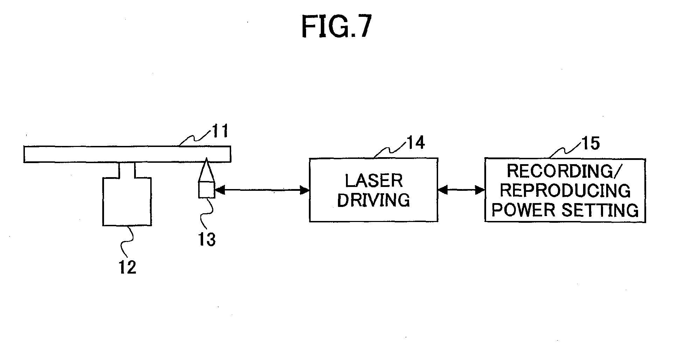

Furthermore, by varying the change of the product W*L every track, every unit time, or every prescribed radial length, an optical recording medium with multiple signal characteristics can be obtained. This optical recording medium can be used as a test disk for examining the driving condition of the disk drive. For example, when reproducing signals from each of the signal recording areas of different signal characteristics, the signal quality is evaluated and the driving condition and the reproducing performance of the disk drive can be determined. The signal characteristics include, for example, reflectance, jitter, radial contrast, I3/Itop, I11/Itop, push-pull signal strength, asymmetry, CNR (carrier-to-noise ratio) of Wobble, error rate, crosstalk, and radial noise. If the optical recording medium is a hybrid disk having a recordable area (or a RAM area), the reproduced signal characteristic of the ROM area and the recorded signal characteristic of the RAM area can be compared with each other after new signals are recorded in the RAM area using a recording disk drive illustrated in FIG. 7.

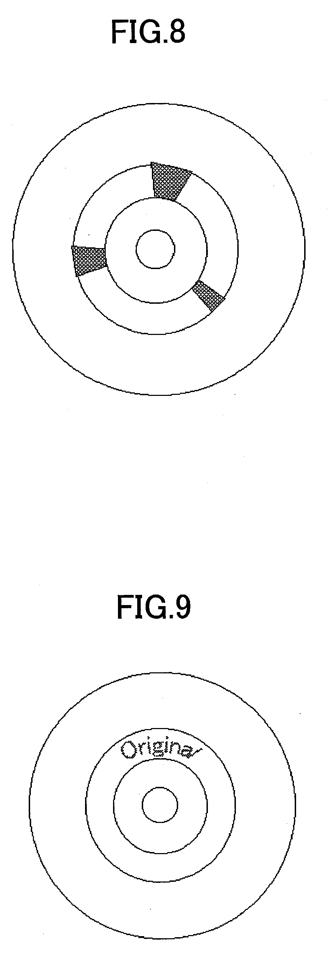

FIG. 8 is another example of a visible pattern formed in the ROM area making use of change in reflectance of the recording portion. In the example shown in FIG. 8, a radial pattern is produced in the ROM area. This pattern can be produced by changing the exposure power and the pit duty to vary the width (W) and the length (L) of the pit in accordance with an analog or digital signal in synchronization with an origin signal generated at the rotational origin during the laser exposure in the fabrication process of the stamper. Similarly, characters or pictures can be produced as the visible pattern formed in the ROM area, making use of change in reflectance of the recording portion, as illustrated in FIG. 9.

The former technique for producing a visible radial pattern can be applied to creating a barcode along the track. An optical recording medium with the combination of a radial pattern and a symbol pattern (including characters and figures) can effectively prevent unauthorized copying. Even if the information recorded in the optical recording disk with the visible radial pattern and the symbol pattern is fully copied in a recording disk consisting only of RAM areas, the radial pattern and the symbol pattern cannot be copied because the disk drive shown in FIG. 7 is incapable of changing the laser beam power and the pit duty during the recording operation.

In this manner, producing a visible radial pattern or a symbol pattern in the ROM area of the optical recording medium is beneficial because the originality of the information recorded in the optical recording medium is guaranteed, while clearly and visibly representing the inherent information of the optical recording medium. If the optical recording medium with the visible pattern is a hybrid disk having a recordable area (or a RAM area), security information, such as ID or personal information, can be added in this recordable area. This arrangement can further improve the security and genuineness of the optical recording medium.

In the above-described embodiment, a pigment liquid material is used for the recording layer of a hybrid disk. However, the recording layer may be formed of a material containing a quarternary compound (Ag-In-Sb-Te) phase change material as the major component. In this case, a dielectric layer made of a mixture of a metal oxide, a nitride, carbide and a sulfide is deposited, in addition to the reflecting layer and the overcoat layer, over the substrate. With this arrangement, the optical recording medium can be realized as a rewritable hybrid disk, which can bear new information in the recordable area, besides the already recorded information stored in the ROM area, and in addition, allows the newly recorded information to be rewritten.

Of course, the optical recording medium with the visible pattern may be a read-only disk consisting of only ROM areas, without being furnished with a recordable area. As long as the visible pattern is formed in the ROM area by means of the above-described technique, the read-only optical recording medium can allow the user to identify the information contained in the disk prior to reproduction of the information, while effectively preventing unauthorized copying.

Next, actual examples of the optical recording medium with visible patterns fabricated by the above-described invention are described below.

### (Example 1)

A disk substrate is fabricated using a polycarbonate substrate with a thickness of 1.2 mm, in which a ROM area is arranged from radius 25 mm to 38 mm of the disk and a recordable area is provided from radius 38 mm to the outer periphery. Three data files A, B, and C are arranged in the ROM area, by converting the data into wobble pits with a depth of 2980 angstroms in accordance with the CD format, while a groove with a depth of 1030 angstroms is formed in the recordable area of the disk.

In the fabrication process of the stamper of this disk, the exposure power of the laser beam for forming the pit pattern is varied for each of the data file regions, as shown in Table 1, during the laser exposure process. Exposure power is set to 3.0 mW, 3.4 mW, and 3.8 mW, increasing stepwise by 0.4 mW, for the respective data files in order to increase the pit width, so that the product W*L of the width (W) and the length (L) of 3T pit varies among the data file regions. The nT pit duty is fixed at 35%.

A recording layer is formed over the substrate by applying a phthalocyanine pigment up to thickness of 130 nm onto the substrate by spin coating. Then, an Ag reflecting layer with a thickness of 110 nm is formed over the recording layer by sputtering. Finally, the top and the bottom surfaces are covered with an overcoat layer and a protective hardcoat, respectively, by spin-coating an ultraviolet setting resin.

In the ROM area of the optical recording medium fabricated in the above-described manner, a visible concentric pattern consisting of annular areas of light and shade contrast with different reflectance values, as shown in Table 3, turns up clearly corresponding to the respective data file regions. With this optical recording medium, not only the number of data files stored in the ROM area becomes apparent, but also the location and the volume of each data file can be identified because each of the data file regions is defined by a specific range of radius and is visibly distinguishable from another in the gradation.

**TABLE 1**

| DATA FILE | EXPOSURE POWER [mW] | 3T PIT WIDTH [µm] | 3T PIT W*L [µm²] | RADIUS RANGE [mm] | REFLECTANCE [%] |
|---|---|---|---|---|---|
| A | 3.0 | 0.554 | 0.328 | 25.0-28.4 | 70.5 |
| B | 3.4 | 0.593 | 0.374 | 28.4-30.5 | 68.3 |
| C | 3.8 | 0.619 | 0.435 | 30.5-38.0 | 65.7 |

### (Example 2)

A disk substrate is fabricated using a polycarbonate substrate with a thickness of 1.2 mm, in which a ROM area is arranged from radius 25 mm to 40 mm of the disk and a recordable area is provided from radium 40 mm to the outer limit. Three data files A, B, and C are arranged in the ROM area, by converting the data into wobble pits with a depth of 2980 angstroms in accordance with the CD format, while a groove with a depth of 1030 angstroms is formed in the recordable area of the disk.

In the fabrication process of the stamper of this disk, the duty of the nT pit is varied from 31% to 39%, increasing by 4% every 5 mm in the radius direction, as shown in Table 2, during the laser exposure process. By changing the nT pit duty, the length of the pit changes for each data file region, and consequently, the product W*L of the width (W) and the length (L) of 3T pit varies among the data file regions. The exposure power is fixed to 3.7 mW.

A recording layer and a reflecting layer are formed successively, as in Example 1, with the same film thickness. An overcoat layer and a protective hardcoat made of an ultraviolet setting resin are also formed on respective sides of the disk by spin coating.

In the ROM area of the optical recording medium fabricated in the above-described manner, a visible concentric pattern consisting of annular areas of light and shade contrast with different reflectance values turns up clearly, corresponding to the respective data file regions, as in Example 1. In addition, since the asymmetry, the C1 error rate, the 3T jitter, and the I3/Itop ratio vary among these three regions in a stepwise manner, the ROM area reproduction characteristics of a disk drive can be tested in reduced test time, using a single optical recording medium. By employing a 3T pit jitter and an 13/Itop ratio with a small rate of characteristic change, the reproduction ability of the disk drive can be determined in detail.

ID information can be added in the recordable area of the disk using a recording/reproducing disk drive with a structure and a mechanism shown in FIG. 7. By adding the ID information in the recordable area, the originality of the optical recording medium is improved, as compared with the pre-recording state. In addition, the reproduction characteristic of the disk drive can be determined by comparing the signals from the respective file regions of the ROM area and the recording signals from the recordable area.

**TABLE 2**

| RADIUS RANGE [mm] | nT PIT DUTY[%] | 3T PIT W*L [µm²] | ASYMMETRY [%] | C1 ERROR RATE | 3T Pit Jitter [ns] | I3/Itop |
|---|---|---|---|---|---|---|
| 25-30 | 31 | 0.421 | -0.3 | 79.2 | 27 | 0.505 |
| 30-35 | 35 | 0.462 | -4.4 | 9.6 | 25 | 0.517 |
| 35-40 | 39 | 0.536 | -7.6 | 4.3 | 23 | 0.525 |

As has been described in detail above using actual examples, an optical recording medium with a visible pattern that allows the user to identify the number and the type of information stored in the disk and to estimate the data volume of each data region is provided. In addition, the visible pattern formed in the ROM area of the optical recording disk can effectively prevent unauthorized copying because the visible pattern cannot be copied even if the signal data stored in disk are illegally copied. Furthermore, the optical recording medium with visible pattern can be used as a test disk making use of the characteristics changing among multiple regions on the disk.

This patent application is based on and claims the benefit of the earlier filing date of Japanese Patent Application Nos. 2002-366195 filed December 18, 2002 and 2003-159288 filed June 4, 2003, the entire contents of which are hereby incorporated by reference.

## Claims

1. An optical recording medium having a visible pattern in a read-only area of a disk, the visible pattern being produced making use of change in reflectance of the disk caused by change in product W*L of a width (W) and a length (L) of an nT pit formed in the read-only area, where n denotes a natural number and T denotes clock time.

2. The optical recording medium of claim 1, wherein the visible pattern is a concentric pattern.

3. The optical recording medium of claim 1, wherein the visible pattern is a radial pattern.

4. The optical recording medium of claim 1, wherein the visible pattern is a character or symbol pattern.

5. The optical recording medium according to any one of claim 1 through claim 4, wherein the disk has a recordable area, in addition to the read-only area.

6. The optical recording medium of claim 1, wherein the read-only area is divided into a plurality of regions, and at least one of the width and the length of the nT pit are variable such that the product W*L varies among the regions.

7. The optical recording medium of claim 1, wherein the read-only area is divided into a plurality of regions, and the length of the nT pit varies among the regions, each of the regions having a different value of a signal reproduction characteristic, in addition to a different value of the product W*L.

8. An optical recording medium comprising:
a substrate having a read-only area in which pits are formed such that a product W*L of a width (W)'and a length (L) of an nT pit varies according to a prescribed manner, where n denotes a natural number and T denotes clock time.

9. The optical recording medium of claim 8, wherein the substrate is of a disk type, and the product W*L of the nT pit varies in the radius direction of the disk.

10. The optical recording medium of claim 8 or 9, wherein the product W*L of the nT pit varies continuously.

11. The optical recording medium of claim 8, wherein the substrate is of a disk type, and the product W*L of the nT pit varies in the circumferential direction of the disk.

12. The optical recording medium of claim 8 or 11, wherein the product W*L of the nT pit varies discontinuously.

13. The optical recording medium of claim 8, wherein a reflectance of the read-only area varies along with change in the product W*L, thereby producing a visible pattern in the read-only area.

14. The optical recording medium of claim 8, further comprising a recording layer formed over the substrate, the recording layer being made of a pigment liquid material.

15. The optical recording medium of claim 14, further comprising a reflecting layer formed over the recording layer.

16. A method of fabricating an optical recording medium comprising the steps of:
preparing a stamper having a prescribed pit pattern; and
forming a disk using the stamper, the disk having the pit pattern in a prescribed area in which a product W*L of a width (W) and a length (L) of an nT pit varies, where n is a natural number and T denotes clock time.

17. The method of claim 16, wherein the stamper preparing step includes a step of forming the pit pattern with a variable length of the nT pit in the stamper.

18. The method of claim 17, wherein the pit pattern forming step includes a laser exposure step of delineating the pit pattern, while changing an exposure duty of the nT pit.

19. The method of claim 17, wherein the pit pattern is formed in the stamper such that the produce W*L of the nT pit varies discontinuously.

20. The method of claim 16, wherein the stamper preparing step includes a step of forming the pit pattern with a variable width of the nT pit in the stamper.

21. The method of claim 20, wherein the pattern forming step includes a laser exposure step of delineating the pit pattern, while changing an exposure power.

22. The method of claim 20, wherein the pit pattern of the stamper is formed such that the product W*L of the nT pit varies continuously.

23. A stamper used to fabricate a substrate of an optical recording medium, wherein the stamper has a prescribed pit pattern in at least a portion thereof, the pit pattern being formed such that a product W*L of a width and a length of an nT pit forming the pit pattern varies, where n is a natural number and T denotes clock time.

24. The stamper of claim 23, wherein the stamper is used to fabricated a disk-type optical recording medium, and the product W*L of the nT pit varies in a radial direction.

25. The stamper of claim 23 or claim 24, wherein the product W*L of the nT pit varies continuously.

26. The stamper of claim 23, wherein the stamper is used to fabricate a disk-type optical recording medium, and the product W*L of the nT pit varies in a circumferential direction.

27. The stamper of claim 23 or 26, wherein the product W*L of the nT pit varies discontinuously.
